# EUROPEAN PATENT SPECIFICATION

(11) **EP 2 250 698 B1**
(45) Date of publication and mention of the grant of the patent: **14.08.2013**
(21) Application number: 09716340.6
(22) Date of filing: 04.03.2009
(51) Int. Cl.: H01M 8/10

(54) **ION-CONDUCTING MEMBRANE STRUCTURES**
IONENLEITFÄHIGE MEMBRANENSTRUKTUREN
STRUCTURES DE MEMBRANE CONDUCTRICE D'IONS

(30) Priority: 07.03.2008 GB 0804185
(43) Date of publication of application: 17.11.2010
(73) Proprietor: Johnson Matthey Fuel Cells Limited, London EC4A 4AB (GB)
(72) Inventor: BARNWELL, David Edward, Wiltshire SN6 7PJ (GB); HODGKINSON, Adam John, Wiltshire SN5 5UY (GB); RALPH, Thomas Robertson, Wiltshire SN15 5AX (GB)
(74) Representative: Swift, Jane Elizabeth Berrisford
(86) International application number: PCT/GB2009/050217
(87) International publication number: WO 2009/109780

(56) References cited:
- WO-A-2007/113589
- US-A1- 2005 136 308
- US-A1- 2007 238 000

## Description

The present invention relates to a novel ion-conducting membrane structure, suitable for use in electrochemical devices, for example fuel cells.

A fuel cell is an electrochemical cell comprising two electrodes separated by an electrolyte. A fuel, such as hydrogen or an alcohol such as methanol or ethanol, is supplied to the anode and an oxidant, such as oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

In proton exchange membrane (PEM) fuel cells, the electrolyte is a solid polymeric membrane. The membrane is electronically insulating but ionically conducting. The membrane is typically proton conducting, and protons, produced at the anode, are transported across the membrane to the cathode, where they combine with oxygen to form water.

The principle component of a PEM fuel cell is known as a membrane electrode assembly (MEA) and is essentially composed of five layers. The central layer is the polymer ion-conducting membrane. On either side of the ion-conducting membrane there is an electrocatalyst layer, containing an electrocatalyst designed for the specific electrolytic reaction. Finally, adjacent to each electrocatalyst layer there is a gas diffusion layer. The gas diffusion layer must allow the reactants to reach the electrocatalyst layer and must conduct the electric current that is generated by the electrochemical reactions. Therefore the gas diffusion layer must be porous and electrically conducting.

The MEA can be constructed by several methods. The electrocatalyst layer may be applied to the gas diffusion layer to form a gas diffusion electrode. Two gas diffusion electrodes can be placed either side of an ion-conducting membrane and laminated together to form the five-layer MEA. Alternatively, the electrocatalyst layer may be applied to both faces of the ion-conducting membrane to form a catalyst coated ion-conducting membrane. Subsequently, gas diffusion layers are applied to both faces of the catalyst coated ion-conducting membrane. Finally, an MEA can be formed from an ion-conducting membrane coated on one side with an electrocatalyst layer, a gas diffusion layer adjacent to that electrocatalyst layer, and a gas diffusion electrode on the other side of the ion-conducting membrane.

Typically tens or hundreds of MEAs are required to provide enough power for most applications, so multiple MEAs are assembled to make up a fuel cell stack. Field flow plates are used to separate the MEAs. The plates perform several functions: supplying the reactants to the MEAs, removing products, providing electrical connections and providing physical support.

Conventional ion-conducting membranes used in the PEM fuel cell are generally formed from perfluorinated sulphonic acid (PFSA) ionomers and the membranes formed from these ionomers are sold under the trade names Nafion^{®} (E.I. DuPont de Nemours and Co.), Aciplex^{®} (Asahi Kasei) and Flemion^{®} (Asahi Glass KK). Such PFSA based ion-conducting membranes are suitably formed from a polymer having a side chain linked to the backbone of the polymer via an ether linkage. The typical structure of PFSA ionomers is shown below.

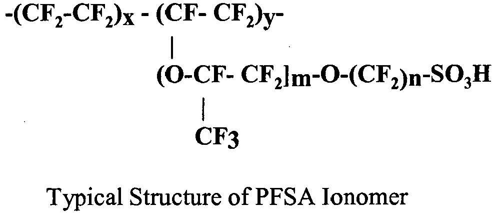

As an alternative to PFSA ion-conducting membranes it is possible to use ion-conducting membranes based on sulfonated or phosphonated hydrocarbon polymers, such as the polyarylenes, including polyether sulfones (e.g. polyarylene sulfone (PSU, Udel^{®}), polyarylene ether sulfone (PES, Victrex^{®}) and polyether ketones (e.g. polyarylene ether ether ketone (PEEK,Victrex^{®}), polyarylene ether ether ketone ketone (PEEKK, Hostatec^{®}), polyarylene ether ketone, ether ketone ketone (PEKEKK, Ultrapec^{®}) and polyarylene ether ketone (PEK, Victrex^{®})). Polybenzazole polymers can also be used such as ayrl or alkyl substituted polybenzimidazole (e.g. polybenzimidazole-N-benzylsulfonate), polybenzoxazoles and polybenzothiazoles.

The PFSA or hydrocarbon based ion-conducting membrane may contain a reinforcement to provide improved mechanical properties such as increased tear resistance and reduced dimensional change on hydration and dehydration. The preferred reinforcement may be based on, but not exclusively, a microporous web or fibres of a fluoropolymer such as polytetrafluoroethylene (PTFE), as described in US 6,254,978, EP 0814897 and US 6,110,330, or polyvinylidene fluoride (PVDF), or alternative-materials-such as PEEK or polyethylene.

For widespread adoption of PEM fuel cells there is a need to provide both the required performance and durability. The drive to increase performance levels has resulted in the adoption of thin, PFSA ion-conducting membranes of thickness 30 µm and below, particularly for automotive applications. The use of thin ion-conducting membranes increases the high current density MEA performance. While the thin ion-conducting membranes have delivered increased performance, there is a need to improve the durability of MEAs containing the thin ion-conducting membranes. Sources of premature ion-conducting membrane failure are ascribed to pin-holing or tearing due to mechanical stress and chemical attack. Introducing reinforcement into the ion-conducting membrane can provide mitigation from mechanical failure of the ion-conducting membrane.

Chemical attack of the PFSA can be attributed to the formation of peroxy and hydroperoxy radicals formed as a result of the reaction of hydrogen and oxygen permeating through the ion-conducting membrane, at the Pt catalyst located in the electrocatalyst layers and in the ion-conducting membrane (due to Pt dissolution and corrosion of the electrocatalyst carbon support after prolonged operation). It is commonly believed hydrogen peroxide is formed, which then decomposes to the radicals, in a process which is catalysed by the metal impurities in the ion-conducting membrane (e.g. Fe²⁺ > Cu²⁺ > Ti³⁺ > Mg²⁺ > Na⁺). Alternatively, other work has shown that direct radical formation is possible.

Attempts have been made to employ hydrogen peroxide decomposition catalysts in the MEA, which decompose the hydrogen peroxide to water and oxygen, for example as disclosed in WO2005/060039. However, with the thicker PFSA ion-conducting membranes employed (e.g. Nafion^{®} NE-112, ca. 50 µm thick), which are easier to protect from chemical attack due to the significantly lower level of hydrogen and oxygen permeating through the ion-conducting membrane, there was an unacceptable reduction in MEA performance due to the presence of the hydrogen peroxide decomposition catalyst. The durability challenge presented by the much thinner ion-conducting membranes adopted today is significantly greater and a lower MEA performance cannot be tolerated due to the associated reduction in fuel cell system efficiency.

It is therefore an object of the invention to provide an improved ion-conducting membrane structure incorporating an ion-conducting membrane, which structure has an increased resistance to chemical attack but without adversely impacting the MEA performance.

Accordingly, the present invention provides an ion-conducting membrane structure according to claim 1 comprising (1) an ion-conducting membrane wherein said membrane has a first face and a second face, (ii) a first hydrogen peroxide decomposition catalyst and (iii) a first radical scavenger, wherein the first hydrogen peroxide decomposition catalyst is in a first layer on the first face of the ion-conducting membrane in an amount from 0.01 to 15µg/cm² or the first hydrogen peroxide decomposition catalyst in embedded within the ion-conducting membrane in an amount from 0.001 to 5% by weight.

In one aspect of the invention, the first hydrogen peroxide decomposition catalyst is in a first layer on the first face of the ion-conducting membrane in an amount of from 0.01µg/cm² to 15µg/cm². The first radical scavenger may be (i) in the first layer on the first face of the ion-conducting membrane; (ii) in a second layer on the second face of the ion-conducting membrane; or (iii) embedded within the ion-conducting membrane.

In one embodiment of the first aspect of the invention, the first radical scavenger is also present in the first layer on the first face of the ion-conducting membrane. In one possible arrangement, the first hydrogen peroxide decomposition catalyst and the first radical scavenger are present as separate layers in the first layer. The first hydrogen peroxide decomposition catalyst layer can be adjacent to the ion-conducting membrane; alternatively, the radical scavenger layer is adjacent to the ion-conducting membrane. In a second possible arrangement, the first hydrogen peroxide decomposition catalyst and the first radical scavenger are present as a single mixed layer in the first layer on the first face of the ion-conducting membrane. In a third possible arrangement, the first layer on the first face of the ion-conducting membrane comprises a combination of separate and mixed layers comprising the first hydrogen peroxide decomposition catalyst and the first radical scavenger. The separate layer may be adjacent to the ion-conducting membrane; alternatively, the mixed layer is adjacent to the ion-conducting membrane.

In a second embodiment of the first aspect of the invention, the first radical scavenger is present in a second layer on the second face of the ion-conducting membrane.

In a third embodiment of the first aspect of the invention, the first radical scavenger is embedded within the ion-conducting membrane.

The ion-conducting membrane structure may further comprise one or more additional hydrogen peroxide decomposition catalysts and/or one or more additional radical scavengers. The one or more additional hydrogen peroxide decomposition catalysts and/or one or more additional radical scavengers may be present (i) in a first layer on the first face of the ion-conducting membrane; (ii) in a second layer on the first face of the ion-conducting membrane; and/or (iii) embedded within the ion-conducting membrane or a combination thereof.

In a second aspect of the invention, the first hydrogen peroxide decomposition catalyst is embedded within the ion-conducting membrane in an amount of from 0.001 to 5% by weight. The first radical scavenger may be (i) in a first layer on the first face of the ion-conducting membrane; or (ii) embedded within the ion-conducting membrane.

In one embodiment of the second aspect of the invention, the first radical scavenger is present in a first layer on the first face of the ion-conducting membrane.

In a second embodiment of the second aspect of the invention, the first radical scavenger is embedded within the ion-conducting membrane. The first hydrogen peroxide decomposition catalyst and the first radical scavenger may either be present in the ion-conducting membrane as separate layers or as a mixed layer or as a combination of separate and mixed layers.

Any of the above embodiments may also comprise one or more second hydrogen peroxide decomposition catalysts and/or one or more second radical scavengers. The one or more second hydrogen peroxide decomposition catalysts and/or one or more second radical scavengers may be present in the first layer on the first face of the ion-conducting membrane, in the second layer on the second face of the ion-conducting membrane and/or embedded within the ion-conducting membrane or a combination thereof.

The first and, if present, second hydrogen peroxide decomposition catalyst are suitably independently selected from the group of metal oxides. Examples of suitable metal oxides include cerium oxides, manganese oxides, titanium oxides, berylium oxides, bismuth oxides, zirconium oxides, gallium oxides, germanium oxides, aluminium oxides, tantalum oxides, niobium oxides, hafnium oxides, vanadium oxides and lanthanum oxides. More preferably are used oxides of cerium, (such as cerium dioxide from Nyacol Nano Technologies Inc. or from the Opaline range from Rhodia Electronics and Catalysts or cerium oxide nano powder from Meliorum Technologies), oxides of manganese, (such as manganese dioxide from Meliorum Technologies), or oxides of titanium. Most preferably cerium dioxide (ceria) is used.

When the first and/or second hydrogen peroxide decomposition catalysts are present in a first layer on the first face of the ion-conducting membrane or in a second layer on the second face of the ion-conducting membrane, it is suitably present in an amount of from 0.01 µg/cm² to 15 µg/cm², more suitably from 0.5 µg/cm² to 10 µg/cm², preferably from 1 µg/cm² to 5 µg/cm², and more preferably from 1 µg/cm² to 3 µg/cm². Suitably, the first and/or second hydrogen peroxide decomposition catalyst has a continuous uniform loading in the x-y direction in the first and/or second layer on the first and/or second face of the ion-conducting membrane. Suitably, the thickness of the first and/or second hydrogen peroxide decomposition catalyst layer in the z-direction in the first and/or second layer on the first and/or second face of the ion-conducting membrane is less than 200nm, and more suitably less than 100nm.

When the first and/or second hydrogen peroxide decomposition catalyst is embedded within the ion-conducting membrane, it is suitably present in an amount of from 0.001 to 5wt% (as a percentage based on the weight of the ion-conducting membrane structure), more suitably 0.005 to 2wt%, most suitably 0.01 to 1wt% and preferably 0.02 to 0.5wt%. Suitably, the first and/or second hydrogen peroxide decomposition catalyst has a continuous uniform loading in the x-y direction in the ion-conducting membrane.

The first and second radical scavengers are suitably one or more radical scavengers independently selected from the group comprising a regenerative antioxidant such as a hindered amine stabiliser (HAS) or hindered amine light stabiliser (HALS). The first and second radical scavengers may be the same or different and each may comprise a single radical scavenger or a combination of two or more.

In one embodiment, the first and/or second radical scavenger is a regenerative HALS type, such as those that have -NOR groups, as these are stable in an acidic environment, such as the environment provided by PFSA ion-conducting membranes. Those that are most preferred are from Ciba's commercial range of Tinuvin^{®} HALS antioxidants or their generic equivalents from Great Lakes commercially known as the Lowinox^{®} range. Specifically the most preferred are Tinuvin^{®} 152 and Tinuvin^{®} 123 HALS antioxidants. Tinuvin^{®} 152 has the chemical structure 2,4-bis[N-Butyl-N-(1-cyclohexyloxy-2,2,6,6-tetramethylpiperidin-4-yl)amino]-6-(2-hydroxyethylamine)-1,3,5-triazine, as shown below:

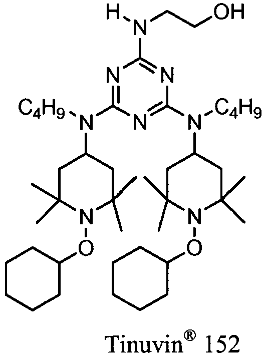

Tinuvin^{®} 123 has the chemical structure decanedioic acid, bis(2,2,6,6-tetramethyl-1-(octyloxy)-4-piperidinyl)ester as shown below.

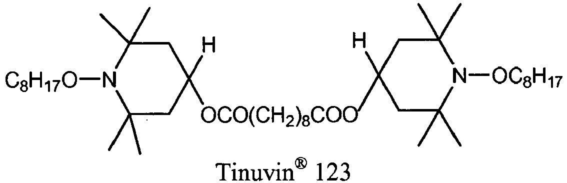

As a consequence of having the -NOR groups in their structure Tinuvin^{®} 152 and Tinuvin^{®} 123 are regenerated during radical scavenging by a cyclic process called the Denisov cycle (shown below) rather than being consumed during the stabilisation process. This ability to regenerate is a major advantage of this type of radical scavenger, since it means they have the potential to be active over the long periods of PEM fuel cell operation required for practical application of the technology.

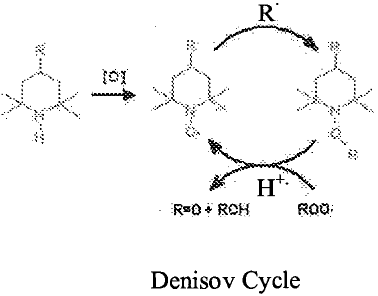

Other suitable radical scavenger antioxidants include carbon centred radical scavengers such as lactones (e.g. substituted benzofuranone, benzofuranone derivatives, HP-136 from Ciba Inc.), hydroquinolines (e.g. 2,2,4-trimethyl-1,2-dihydroquinoline supplied as Flectol HPG by Flexsys Solutia), hydroxylamines (such as FS042 from Ciba Inc.), acrylated bis-phenols, hydroquinones and quinones.

These radical scavengers are suitably used in combination with a HALS/HAS radical scavenger as they are not regenerative and therefore may only have limited use.

When the first and/or second radical scavenger is present in the first layer on the first face of the ion-conducting membrane or in the second layer on the second face of the ion-conducting membrane, it is suitably present in an amount of from 0.06 µg/cm² to 120 µg/cm², more suitably from 0.3 µg/cm² to 60 µg/cm², preferably from 0.6 µg/cm² to 30 µg/cm², and more preferably from 1.2 µg/cm² to 15 µg/cm². Suitably, the first and/or second radical scavenger has a continuous uniform loading in the x-y direction in the first and/or second layer on the first and/or second face of the ion-conducting membrane. Suitably, the thickness of the first and/or second radical scavenger layer in the z-direction in the first and/or second layer on the first and/or second face of the ion-conducting membrane is less than 200nm, and more suitably less than 100nm.

When the first and/or second radical scavenger is distributed within the bulk of the ion-conducting membrane, it is suitably present in an amount from 0.001 to 2wt% (as a percentage based on the weight of the ion-conducting membrane structure), more suitably from 0.005 to 1wt%, preferably from 0.01 to 0.5wt%, and most preferably from 0.02 to 0.25wt%. Suitably, the first and/or second radical scavenger has a continuous uniform loading in the x-y direction in the ion-conducting membrane.

The ion-conducting membrane is suitably a polymer as described hereinbefore as being of use in PEM fuel cells. In one preferred embodiment, the ion-conducting membrane is based on a PFSA polymer. Suitably, the ion-conducting membrane has a thickness of less than 200 µm, more suitably less than 50 µm, and preferably less than 40 µm. Suitably, the ion-conducting membrane has a minimum thickness of 5 µm. In one embodiment, the ion-conducting membrane has a thickness of from 5 µm to 40 µm. In a second embodiment, the ion-conducting membrane has a thickness of from 5 µm to 25 µm.

Preparation of the ion-conducting membrane structure of the present invention will depend on whether the first/second hydrogen peroxide decomposition catalyst and the first/second radical scavenger is in a layer on a face of the ion-conducting membrane or embedded within the ion-conducting membrane.

If the first/second hydrogen peroxide decomposition catalyst and/or first/second radical scavenger are present in a layer on a face of the ion-conducting membrane, a dispersion comprising the hydrogen peroxide decomposition catalyst and/or the radical scavenger in a suitable carrier is first prepared. Suitable carriers include, but are not limited to water, PFSA or hydrocarbon based ionomers (either as water/alcohol mix or in alcohol) or organic solvents, such as methyl ethyl ketone (MEK), 1-butanol or other suitable organic solvent in which the additive can be dispersed. Preferred carriers include PFSA or hydrocarbon based ionomers. The prepared dispersion is the applied to the ion-conducting membrane by any technique known to those skilled in the art, for example screen printing, rotary screen printing, inkjet printing, spraying, painting, immersion or dipping, bar coating, pad coating, gap coating techniques such as knife or doctor blade over roll (whereby the coating is applied to the substrate then passes through a split between the knife and a support roller), air knife coating (whereby the coating is applied to the substrate and the excess is 'blown off by a powerful jet from the air knife.), slot die (slot, extrusion) coating (whereby the coating is squeezed out by gravity or under pressure via a slot onto the substrate), metering rod application such as with a Meyer bar and gravure coating. Alternatively, the hydrogen peroxide decomposition catalyst and/or radical scavenger may be applied to a transfer substrate and then applied to the ion-conducting membrane by decal transfer, the transfer substrate subsequently being removed. The coating dispersion applied is then allowed to dry. The required number of coatings can be applied on the same face or on the other face using different or the same components to build up the required structure.

If the first/second hydrogen peroxide decomposition catalyst and/or first/second radical scavenger are embedded within the ion-conducting membrane, the first/second hydrogen peroxide decomposition catalyst and/or first/second radical scavenger is added to the bulk of the ion-conducting membrane, as a colloid, solution or dispersion by any mixing, blending, dispersing or dissolving process known to those skilled in the art, prior to forming the membrane film by casting, extrusion casting, melt process extrusion or injection moulding. For example, the radical scavenger may be added using a low or high shear mixer, single or a twin reciprocating screw mixer, an intermix type rotary mixer or stirrer. The first/second hydrogen peroxide decomposition catalyst and/or first/second radical scavenger may also be added during the casting/extrusion process or moulding process by accurate metering. If the first/second hydrogen peroxide decomposition catalyst and/or first/second radical scavenger are present in the ion-conducting membrane in separate layers, separate ion-conducting membranes can be prepared and then combined to form a single ion-conducting membrane.

The ion-conducting membrane structure of the invention may be used in any electrochemical device requiring an ion-conducting, specifically proton-conducting, membrane. Accordingly, a further aspect of the invention provides an electrochemical device comprising an ion-conducting membrane structure as hereinbefore described. Alternatively, there is provided the use of an ion-conducting membrane structure as hereinbefore described in an electrochemical device. In a preferred embodiment of the invention, the ion-conducting membrane structures are used in fuel cells. Thus, the present invention further provides a catalyst-coated ion-conducting membrane structure comprising an ion-conducting membrane structure according to the invention and an electrocatalyst layer deposited on at least one side of the ion-conducting membrane structure. In one embodiment, the catalyst-coated ion-conducting membrane structure has an electrocatalyst layer deposited on both sides of the ion-conducting membrane structure.

The electrocatalyst layer comprises an electrocatalyst, which may be a finely divided unsupported metal powder, or may be a supported catalyst wherein small metal particles are dispersed on electrically conducting particulate carbon supports. The electrocatalyst metal is suitably selected from
(i) the platinum group metals (platinum, palladium, rhodium, ruthenium, iridium and osmium),
(ii) gold or silver,
(iii) a base metal,
or an alloy or mixture comprising one or more of these metals or their oxides. The preferred electrocatalyst metal is platinum, which may be alloyed with other precious metals or base metals. Ifthe electrocatalyst is a supported catalyst, the loading of metal particles on the carbon support material is suitably in the range 10-90wt%, preferably 15-75wt% of the weight of resulting electrocatalyst.

The electrocatalyst layer may suitably comprise other components, such as ion-conducting polymer, which is included to improve the ionic conductivity within the layer. In one embodiment, the electrocatalyst layer may further comprise one or more hydrogen peroxide decomposition catalysts and/or one or more radical scavenger as hereinbefore described. Preparation routes for preparing electrocatalyst layers comprising these components will be known to the skilled person.

A still further aspect of the invention provides a MEA comprising an ion-conducting membrane structure or a catalyst-coated ion-conducting membrane structure as hereinbefore described. The MEA may be made up in a number of ways including, but not limited to:
(i) an ion-conducting membrane structure of the invention may be sandwiched between two gas diffusion electrodes (one anode and one cathode);
(ii) a catalyst-coated ion-conducting membrane structure of the invention coated on one side only by a catalyst layer and sandwiched between a gas diffusion layer and a gas diffusion electrode, the gas diffusion layer contacting the side of the ion-conducting membrane structure coated with the catalyst layer or;
(iii) a catalyst-coated ion-conducting membrane structure of the invention coated on both sides with a catalyst layer and sandwiched between two gas diffusion layers.

The anode and cathode gas diffusion layers are suitably based on conventional gas diffusion substrates. Typical substrates include non woven papers or webs comprising a network of carbon fibres and a thermoset resin binder (e.g. Toray® paper available from Toray Industries Inc., Japan or the H2315 series available from Freudenberg FCCT KG, Germany, or the Sigracet® series available from SGL Technologies GmbH, Germany, or U105 or U107 paper available from Mitsubishi Rayon, Japan), or woven carbon cloths (e.g. the ELAT® series of woven carbon gas diffusion layers available from BASF Fuel Cell GmbH, Germany). The carbon paper, web or cloth may be provided with a further treatment prior to application of the electrocatalyst layer either to make it more wettable (hydrophilic) or more wet-proofed (hydrophobic). The nature of any treatments will depend on the type of fuel cell and the operating conditions that will be used. The substrate can be made more wettable by incorporation of materials such as amorphous carbon blacks via impregnation from liquid suspensions, or can be made more hydrophobic by impregnating the pore structure of the substrate with a colloidal suspension of a polymer such as PTFE or polyfluoroethylenepropylene (FEP), followed by drying and heating above the melting point of the polymer. For applications, such as the PEMFC, an additional carbonaceous layer, commonly termed a micro-porous layer or base layer, may also be applied before the deposition of the electrocatalyst layer. The microporous layer typically comprises a mixture of a carbon black and a polymer such as polytetrafluoroethylene (PTFE) and is applied to the face of the gas diffusion substrate that contacts the electrocatalyst layers.

The MEA may further comprise components that seal and/or reinforce the edge regions of the MEA for example as described in WO2005/020356. The MEA is assembled by conventional methods known to those skilled in the art.

A yet further aspect of the invention provides a fuel cell comprising an ion-conducting membrane structure, a catalyst-coated ion-conducting membrane structure or a MEA as hereinbefore described.

The ion-conducting membrane structure of the invention will now be described in more detail with reference to the drawings and examples.

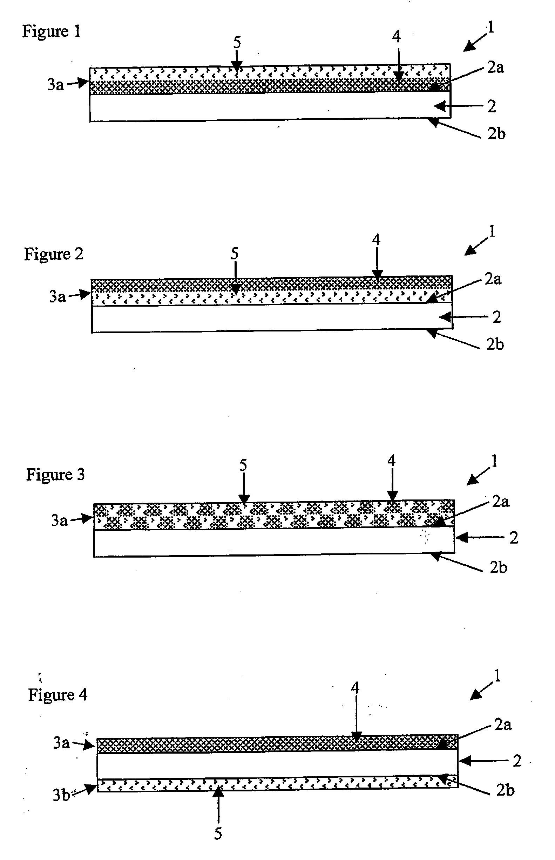

Figure 1 shows a schematic diagram of a cross-section of an ion-conducting membrane structure of the invention comprising an ion-conducting membrane having a first hydrogen peroxide decomposition catalyst and a first radical scavenger in separate layers in a first layer on the first face of the ion-conducting membrane the first hydrogen peroxide decomposition catalyst being adjacent to the ion-conducting membrane.
Figure 2 shows a schematic diagram of a cross-section of an ion-conducting membrane structure of the invention comprising an ion-conducting membrane having a first hydrogen peroxide decomposition catalyst and a first radical scavenger in separate layers in a first layer on the first face of the ion-conducting membrane the first radical scavenger being adjacent to the ion-conducting membrane.
Figure 3 shows a schematic diagram of a cross-section of an ion-conducting membrane structure of the invention comprising an ion-conducting membrane having a first hydrogen peroxide decomposition catalyst and a first radical scavenger as a mixed layer in a first layer on the first face of the ion-conducting membrane.
Figure 4 shows a schematic diagram of a cross-section of an ion-conducting membrane structure of the invention comprising an ion-conducting membrane having a first hydrogen peroxide decomposition catalyst in a first layer on the first face of the ion-conducting membrane and a first radical scavenger in a second layer on the second face of the ion-conducting membrane.

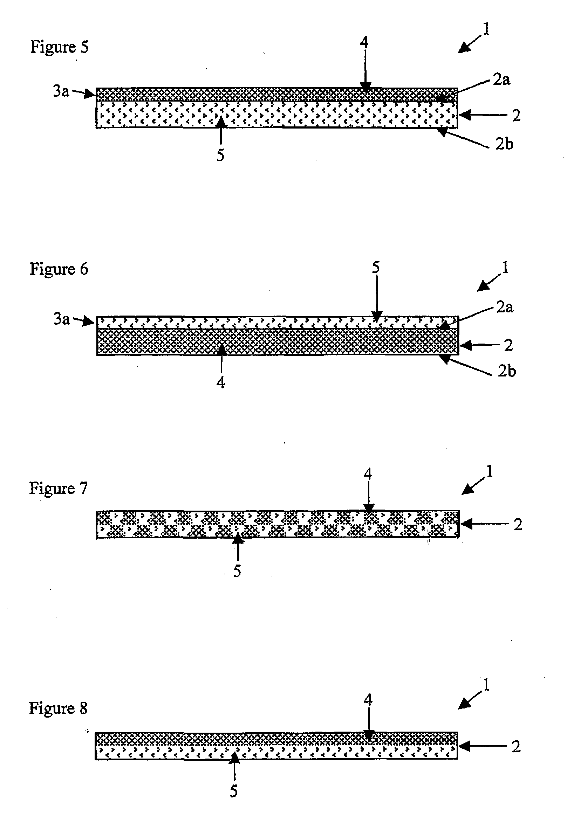

Figure 5 shows a schematic diagram of a cross-section of an ion-conducting membrane structure of the invention comprising an ion-conducting membrane having a first hydrogen peroxide decomposition catalyst in a first layer on the first face of the ion-conducting membrane and a first radical scavenger embedded within the ion-conducting membrane.
Figure 6 shows a schematic diagram of a cross-section of an ion-conducting membrane structure of the invention comprising an ion-conducting membrane having a first hydrogen peroxide decomposition catalyst embedded within the ion-conducting membrane and a first radical scavenger in a first layer on the first face of the ion-conducting membrane.
Figure 7 shows a schematic diagram of a cross-section of an ion-conducting membrane structure of the invention comprising an ion-conducting membrane having a first hydrogen peroxide decomposition catalyst and a first radical scavenger embedded as a mixed layer within the ion-conducting membrane.
Figure 8 shows a schematic diagram of a cross-section of an ion-conducting membrane structure of the invention comprising an ion-conducting membrane having a first hydrogen peroxide decomposition catalyst and a first radical scavenger in separate layers embedded within the ion-conducting membrane.

Figure 1 shows an ion-conducting membrane structure (1) comprising an ion-conducting membrane (2) having a first face (2a) on which is a first layer (3a) and a second face (2b), and wherein a first hydrogen peroxide decomposition catalyst (4) is in the first layer (3a) adjacent to the ion-conducting membrane (2) and a first radical scavenger (5) is in the first layer (3a) away from the ion-conducting membrane (2). A dispersion comprising the first hydrogen peroxide decomposition catalyst (4) is applied to the first face (2a) of the ion-conducting membrane by any technique known to those in the art, for example screen printing, rotary screen printing, inkjet printing, spraying, painting, immersion or dipping, bar coating, pad coating, gap coating techniques such as knife or doc blade over roll (whereby the coating is applied to the substrate then passes through a split between the knife and a support roller), air knife coating (whereby the coating is applied to the substrate and the excess is 'blown off by a powerful jet from the air knife), slot die (slot, extrusion) coating (whereby the coating is squeezed out by gravity or under pressure via a slot onto the substrate), metering rod application such as with a Meyer bar and gravure coating. Alternatively, the first hydrogen peroxide decomposition catalyst (4) is applied to a transfer substrate and then applied to the first face (2a) of the ion-conducting membrane (2) by decal transfer, the transfer substrate subsequently being removed. The coating of the first hydrogen peroxide decomposition catalyst (4) applied is then allowed to dry. A dispersion comprising the first radical scavenger (5) is then applied to the coating of first hydrogen peroxide decomposition catalyst (4) by any technique known to those in the art, and described above. Alternatively, the first radical scavenger (5) is applied using a transfer substrate as described above. The coating of the first radical scavenger (5) is then allowed to dry.

Figure 2 shows an ion-conducting membrane structure (1) comprising an ion-conducting membrane (2) having a first face (2a) on which is a first layer (3a) and a second face (2b), and wherein a first radical scavenger (5) is in the first layer (3a) adjacent to the ion-conducting membrane (2) and a first hydrogen peroxide decomposition catalyst (5) is in the first layer (3a) away from the ion-conducting membrane (2). The first radical scavenger (5) and first hydrogen peroxide decomposition catalyst (4) are applied by one of the techniques described above.

Figure 3 shows an ion-conducting membrane structure (1) comprising an ion-conducting membrane (2) having a first face (2a) on which is a first layer (3a) and a second face (2b), and wherein a first hydrogen peroxide decomposition catalyst (4) and a first radical scavenger (5) is in the first layer (3a) forming a mixed layer. The mixed layer is formed using a similar technique to one of those described above, but the dispersion comprises a mixture of first hydrogen peroxide decomposition catalyst (4) and first radical scavenger (5) or a mixture of first hydrogen peroxide decomposition catalyst (4) and first radical scavenger (5) is first applied to a transfer substrate before being transferred to the ion-conducting membrane (2).

Figure 4 shows an ion-conducting membrane structure (1) comprising an ion-conducting membrane (2) having a first face (2a) on which is a first layer (3a) and a second face (2b) on which is a second layer (3b). A first hydrogen peroxide decomposition catalyst (4) is in the first layer (3a) and a first radical scavenger (5) is in the second layer (3b). The first hydrogen peroxide decomposition catalyst (4) and the first radical scavenger (5) are applied by one of the techniques described above.

Figure 5 shows an ion-conducting membrane structure (1) comprising an ion-conducting membrane (2) having a first face (2a) on which is a first layer (3a) and a second face (2b). A first hydrogen peroxide decomposition catalyst (4) is in the first layer and a first radical scavenger (5) is embedded within the ion-conducting membrane (2). The first radical scavenger (5) is embedded within the ion-conducting membrane, prior to casting the membrane, as a colloid, solution or dispersion by any mixing, blending, dispersing or dissolving process technique known to those skilled in the art; for example, the first radical scavenger (5) may be added using a low or high shear mixer, single or twin reciprocal screw mixer, an intermix type rotary mixer or stirrer. The first hydrogen peroxide decomposition catalyst (4) is applied by one of the techniques described above.

Figure 6 shows an ion-conducting membrane structure (1) comprising an ion-conducting membrane (2) having a first face (2a) on which is a first layer (3a) and a second face (2b). A first radical scavenger (5) is in the first layer and a first hydrogen peroxide decomposition catalyst (4) is embedded within the ion-conducting membrane (2). The first hydrogen peroxide decomposition catalyst (4) is embedded within the ion-conducting membrane by one of the techniques described above. The first radical scavenger (5) is applied by one of the techniques described above.

Figure 7 shows an ion-conducting membrane structure (1) comprising an ion-conducting membrane (2). Embedded within the ion-conducting membrane (2) is a first hydrogen peroxide decomposition catalyst (4) and a first radical scavenger (5). The first hydrogen peroxide decomposition catalyst (4) and first radical scavenger (5) are mixed through the ion-conducting membrane (2). The first hydrogen peroxide decomposition catalyst (4) and first radical scavenger (5) are embedded with the ion-conducting membrane using one of the techniques described above.

Figure 8 shows an ion-conducting membrane structure (1) comprising an ion-conducting membrane (2). A first hydrogen peroxide decomposition catalyst (4) is embedded within one part of the ion-conducting membrane in the z-direction and a first radical scavenger (5) is embedded within another part of the ion-conducting membrane (2) in the z-direction. The first hydrogen peroxide decomposition catalyst (4) is embedded with an ion-conducting membrane prior to casting as described above. Similarly, the first radical scavenger (5) is embedded within an ion-conducting membrane prior to casting as described above. The ion-conducting membranes are then combined by laminating together using a lamination press or a lamination roller to form a single ion-conducting membrane (2) of the invention. This process will involve pressure and heat. An alternative method is to use an ion-conducting adhesive layer (e.g. an ionomer) between the two ion-conducting membranes.

In addition to the first hydrogen peroxide decomposition catalyst (4) and the first radical scavenger (5) being present in the ion-conducting membrane structures (1) described in Figures 1 to 8, one or more second hydrogen peroxide decomposition catalysts and/or one or more second radical scavengers may also be present. The one or more additional components can either be in the first layer (3a) on the first face (2a) of the ion-conducting membrane (2), in the second layer (3b) on the second face (2b) of the ion-conducting membrane (2) or embedded within the ion-conducting membrane (2) or a combination thereof. The one or more additional components can be incorporated into the ion-conducting membrane structure (1) by any of the techniques described above.

## Claims

1. An ion-conducting membrane structure comprising (i) an ion-conducting membrane wherein said membrane has a first face and a second face, (ii) a first hydrogen peroxide decomposition catalyst selected from the group consisting of cerium oxides, manganese oxides, titanium oxides, beryllium oxides, bismuth oxides, zirconium oxides, gallium oxides, germanium oxides, aluminium oxides, tantalum oxides, niobium oxides, hafnium oxides, vanadium oxides and lanthanum oxides; and (iii) a first radical scavenger **characterised in that** the first radical scavenger is selected from the group consisting of regenerative antioxidants, the first hydrogen peroxide decomposition catalyst is in a first layer on the first face of the ion-conducting membrane in an amount from 0.01 to 15µg/cm² or the first hydrogen peroxide decomposition catalyst in embedded within the ion-conducting membrane in an amount from 0.001 to 5% by weight and wherein the first hydrogen peroxide decomposition catalyst in the first layer has a continuous uniform loading in the x-y direction.

2. An ion-conducting membrane structure according to claim 1, wherein the first hydrogen peroxide decomposition catalyst is in the first layer on the first face of the ion-conducting membrane.

3. An ion-conducting membrane structure according to claim 1, wherein the first hydrogen peroxide decomposition catalyst is embedded within the ion-conducting membrane.

4. An ion-conducting membrane structure according to any one of claim 1 to 3, wherein the first radical scavenger is in the first layer on the first face of the ion-conducting membrane.

5. An ion-conducting membrane structure according to any one of claims 1 to 3, wherein the first radical scavenger is embedded within the ion-conducting membrane.

6. An ion-conducting membrane structure according to any one of claims 1 to 5, wherein the ion-conducting membrane structure further comprises one or more second hydrogen peroxide decomposition catalysts.

7. An ion-conducting membrane structure according to any one of claims 1 to 6, wherein the ion-conducting membrane structure further comprises one or more second radical scavengers.

8. An ion-conducting membrane structure according to any one of claims 1 to 7, wherein the regenerative antioxidant is selected from the group consisting of hindered amine stabilisers or hindered amine light stabilisers.

9. A catalyst-coated ion-conducting membrane structure comprising an ion-conducting membrane structure according to any one of claims 1 to 8 and an electrocatalyst layer deposited on at least one side of the ion-conducting membrane structure

10. A membrane electrode assembly comprising an ion-conducting membrane structure according to any one of claims 1 to 8.

11. A membrane electrode assembly comprising a catalyst coated ion-conducting membrane structure according to claim 9.

12. A fuel cell comprising an ion-conducting membrane structure according to any one of claims 1 to 8.

13. A fuel cell comprising a catalyst coated ion-conducting membrane structure according to claim 9.

14. A fuel cell comprising a membrane electrode assembly according to claim 10 or 11.

## Patentansprüche

1. Ionenleitfähige Membranstruktur mit (i) einer ionenleitfähigen Membran, wobei die Membran eine erste und eine zweite Seite aufweist, (ii) einem ersten Wasserstoffperoxid-Zersetzungskatalysator, der aus der Gruppe der Ceriumoxide, Manganoxide, Titanoxide, Berylliumoxide, Bismuthoxide, Zirkonoxide, Galliumoxide, Germaniumoxide, Aluminiumoxide, Tantaloxide, Nioboxide, Hafniumoxide, Vanadiumoxide und Lanthanoxide ausgewählt ist; und (iii) einem ersten Radikalfänger, **dadurch gekennzeichnet, dass** der erste Radikalfänger aus der aus regenerativen Antioxidantien bestehenden Gruppe ausgewählt ist, der erste Wasserstoffperoxid-Zersetzungskatalysator sich in einer ersten Schicht auf der ersten Fläche der ionenleitfähigen Membran in einer Menge von 0,01 bis 15 µg/cm² befindet oder der erste Wasserstoffperoxid-Zersetzungskatalysator in der ionenleitfähigen Membran in einer Menge von 0,001 bis 5 Gew.-% eingebettet ist und wobei der erste Wasserstoffperoxid-Zersetzungskatalysator in der ersten Schicht eine kontinuierliche gleichförmige Beschickung in der x-y-Richtung hat.

2. Ionenleitfähige Membranstruktur gemäß Anspruch 1, wobei der erste Wasserstoffperoxid-Zersetzungskatalysator sich in der ersten Schicht auf der ersten Fläche der ionenleitfähigen Membran befindet.

3. Ionenleitfähige Membranstruktur gemäß Anspruch 1, wobei der erste Wasserstoffperoxid-Zersetzungskatalysator in der ionenleitfähigen Membran eingebettet ist.

4. Ionenleitfähige Membranstruktur gemäß einem der Ansprüche 1 bis 3, wobei der erste Radikalfänger sich in der ersten Schicht auf der ersten Fläche der ionenleitfähigen Membran befindet.

5. Ionenleitfähige Membranstruktur gemäß einem der Ansprüche 1 bis 3, wobei der erste Radikalfänger in der ionenleitfähigen Membran eingebettet ist.

6. Ionenleitfähige Membranstruktur gemäß einem der Ansprüche 1 bis 5, wobei die die ionenleitfähige Membranstruktur darüber hinaus einen oder mehrere zweite Wasserstoffperoxid-Zersetzungskatalysatoren aufweist.

7. Ionenleitfähige Membranstruktur gemäß einem der Ansprüche 1 bis 6, wobei die ionenleitfähige Membranstruktur darüber hinaus einen oder mehrere zweite Radikalfänger aufweist.

8. Ionenleitfähige Membranstruktur gemäß einem der Ansprüche 1 bis 7, wobei das regenerative Antioxidans aus der Gruppe, die aus gehinderten Aminstabilisatoren oder gehinderten Aminlichtstabilisatoren besteht, ausgewählt ist.

9. Mit einem Katalysator beschichtete ionenleitfähige Membranstruktur mit einer ionenleitfähigen Membranstruktur gemäß einem der Ansprüche 1 bis 8 und einer Elektrokatalysatorschicht, die auf mindestens einer Seite der ionenleitfähigen Membranstruktur aufgebracht ist.

10. Membranelektroden-Anordnung mit einer ionenleitfähigen Membranstruktur gemäß einem der Ansprüche 1 bis 8.

11. Membranelektroden-Anordnung mit einer mit einem Katalysator beschichteten, ionenleitfähigen Membranstruktur gemäß Anspruch 9.

12. Brennstoffzelle mit einer ionenleitfähigen Membranstruktur gemäß einem der Ansprüche 1 bis 8.

13. Brennstoffzelle mit einer mit einem Katalysator beschichteten, ionenleitfähigen Membranstruktur gemäß Anspruch 9.

14. Brennstoffzelle mit einer Membranelektroden-Anordnung gemäß Anspruch 10 oder 11.

## Revendications

1. Structure de membrane conductrice d'ions comprenant (i) une membrane conductrice d'ions, ladite membrane ayant une première face et une deuxième face, (ii) un premier catalyseur de décomposition du peroxyde d'hydrogène choisi dans le groupe constitué par les oxydes de cérium, les oxydes de manganèse, les oxydes de titane, les oxydes de béryllium, les oxydes de bismuth, les oxydes de zirconium, les oxydes de gallium, les oxydes de germanium, les oxydes d'aluminium, les oxydes de tantale, les oxydes de niobium, les oxydes d'hafnium, les oxydes de vanadium et les oxydes de lanthane ; et (iii) un premier piégeur de radicaux libres **caractérisé en ce que** le premier piégeur de radicaux libres est choisi dans le groupe constitué par les antioxydants régénérateurs, le premier catalyseur de décomposition du peroxyde d'hydrogène est présent dans une première couche sur la première face de la membrane conductrice d'ions dans une quantité comprise entre 0,01 et 15 µg/cm² ou le premier catalyseur de décomposition du peroxyde d'hydrogène est incorporé dans la membrane conductrice d'ions dans une quantité comprise entre 0,001 et 5 % en poids, et le premier catalyseur de décomposition du peroxyde d'hydrogène présent dans la première couche ayant une charge uniforme continue dans le sens x-y.

2. Structure de membrane conductrice d'ions selon la revendication 1, dans laquelle le premier catalyseur de décomposition du peroxyde d'hydrogène est présent dans la première couche sur la première face de la membrane conductrice d'ions.

3. Structure de membrane conductrice d'ions selon la revendication 1, dans laquelle le premier catalyseur de décomposition du peroxyde d'hydrogène est incorporé dans la membrane conductrice d'ions.

4. Structure de membrane conductrice d'ions selon l'une quelconque des revendications 1 à 3, dans laquelle le premier piégeur de radicaux libres est présent dans la première couche sur la première face de la membrane conductrice d'ions.

5. Structure de membrane conductrice d'ions selon l'une quelconque des revendications 1 à 3, dans laquelle le premier piégeur de radicaux libres est incorporé dans la membrane conductrice d'ions.

6. Structure de membrane conductrice d'ions selon l'une quelconque des revendications 1 à 5, ladite structure de membrane conductrice d'ions comprenant en outre un ou plusieurs deuxième(s) catalyseur(s) de décomposition du peroxyde d'hydrogène.

7. Structure de membrane conductrice d'ions selon l'une quelconque des revendications 1 à 6, ladite structure de membrane conductrice d'ions comprenant en outre un ou plusieurs deuxième(s) piégeur(s) de radicaux libres.

8. Structure de membrane conductrice d'ions selon l'une quelconque des revendications 1 à 7, dans laquelle l'antioxydant régénérateur est choisi dans le groupe constitué par les stabilisants à base d'amines à encombrement stérique ou les photostabilisants à base d'amines à encombrement stérique.

9. Structure de membrane conductrice d'ions à revêtement catalytique comprenant une structure de membrane conductrice d'ions selon l'une quelconque des revendications 1 à 8, et une couche électrocatalytique déposée sur au moins une face de la structure de membrane conductrice d'ions.

10. Assemblage d'électrodes à membranes comprenant une structure de membrane conductrice d'ions selon l'une quelconque des revendications 1 à 8.

11. Assemblage d'électrodes à membranes comprenant une structure de membrane conductrice d'ions à revêtement catalytique selon la revendication 9.

12. Pile à combustible comprenant une structure de membrane conductrice d'ions selon l'une quelconque des revendications 1 à 8.

13. Pile à combustible comprenant une structure de membrane conductrice d'ions à revêtement catalytique selon la revendication 9.

14. Pile à combustible comprenant un assemblage d'électrodes à membranes selon la revendication 10 ou 11.
